Europäisches Patentamt

European Patent Office

Office européen des brevets

(19)

(11) **EP 1 414 686 B1**

(12) **EUROPÄISCHE PATENTSCHRIFT**

(45) Veröffentlichungstag und Bekanntmachung des Hinweises auf die Patenterteilung:
**03.05.2006  Patentblatt 2006/18**

(21) Anmeldenummer: **02758401.0**

(22) Anmeldetag: **26.07.2002**

(51) Int Cl.:
***B60T 13/74*** *(2006.01)*

(86) Internationale Anmeldenummer:
**PCT/EP2002/008362**

(87) Internationale Veröffentlichungsnummer:
**WO 2003/011668 (13.02.2003 Gazette 2003/07)**

(54) **VERFAHREN ZUR ERMITTLUNG DES ZUSAMMENHANGS ZWISCHEN AKTUATORPOSITION UND AKTUATORZUSPANNKRAFT**

METHOD FOR DETERMINING THE RELATIONSHIP BETWEEN ACTUATOR POSITION AND ACTUATOR TENSIONING FORCE

PROCEDE PERMETTANT DE DETERMINER LA RELATION ENTRE LA POSITION D'UN ACTIONNEUR ET LA FORCE DE TENSION DE CET ACTIONNEUR

(84) Benannte Vertragsstaaten:
**DE FR IT**

(30) Priorität: **31.07.2001  DE 10137275
07.02.2002  DE 10205013**

(43) Veröffentlichungstag der Anmeldung:
**06.05.2004  Patentblatt 2004/19**

(73) Patentinhaber: **Continental Teves AG & Co. oHG
60488 Frankfurt am Main (DE)**

(72) Erfinder: **MARON, Christof
65779 Kelkheim (DE)**

(56) Entgegenhaltungen:
WO-A-01/68428          DE-A- 19 703 838
DE-A- 19 742 920          DE-A- 19 826 133

• **SCHWARZ RALF, ISERMANN ROLF: "Clamping Force Estimation for a Brake-by-Wire Actuator" SAE TECHNICAL PAPER SERIES, SOCIETY OF AUTOMOTIVE ENGINEERS, WARRENDALE, PA, US, Nr. 1999-01-0482, März 1999 (1999-03), Seiten 115-126, XP009002760**

EP 1 414 686 B1

**Beschreibung**

Die Erfindung betrifft ein Verfahren sowie ein Regelsystem zur Ermittlung des Zusammenhangs zwischen Aktuatorposition und Aktuatorzuspannkraft bei einer mittels eines elektromechanischen Aktuators betätigbaren Bremse, wobei der Aktuator aus einem Elektromotor sowie einer dem Elektromotor nachgeschalteten Anordnung zur Umwandlung einer Drehbewegung in eine translatorische Bewegung besteht, und wobei das vom Aktuator aufgebrachte Drehmoment durch die Messung des dem Elektromotor zugeführten Stroms bestimmt wird und die Aktuatorposition gemessen wird und der Aktuatorbewegung eine Sinusschwingung kleiner Amplitude aufmoduliert wird.

Die Veröffentlichung "Clamping Force Estimation for a Brake-by-Wire-Actuator", SAE Technical Paper Series, Nr. 1999-01-0482 beschreibt einen elektromechanischen Bremsaktuator und gibt einen Überblick über ein Verfahren zur Ermittlung des Zusammenhangs zwischen Aktuatorzuspannkraft und Aktuatorposition aus den Messwerten der Aktuatorposition und des Aktuatordrehmoments sowie dessen Realisierung mittels eines Regelsystems, bei dem u. a. ein Datenreduktionsmodul, ein Kennlinienidentifikationsmodul und ein Transformationsmodul vorgesehen sind. Eine detailliertere Beschreibung des Verfahrens findet man in der internationalen Patentanmeldung WO 99/16650. Dabei wird ein Ersatzkraftwert bestimmt, der sich allein aus Messwerten der Aktuatorposition und des Aktuatordrehmoments sowie deren zeitlichen Ableitungen und verschiedenen Konstanten berechet. Unbekannte Einflussgrößen wie Reibung und Dämpfung werden durch ein spezielles periodisches Anregungssignal sowie eine aufwendige Auswertung der Messungen herausgerechnet. Nachteilig bei diesem Verfahren ist insbesondere, dass immer alle Messwerte einer ganzen Periode des Anregungssignals zwischengespeichert werden müssen, die dann in einem weiteren Schritt mit einem aufwendigen Auswerteverfahren einen Stützpunkt der zu ermittelnden, den vorhin erwähnten Zusammenhang darstellenden Kennlinie liefern. Damit ist dieses Verfahren nicht echtzeitfähig und setzt außerdem voraus, dass der Anlegepunkt, das ist die Aktuatorposition, bei der die Bremsbeläge gerade an der Scheibe anliegen, aber noch keine Kraft übertragen, bekannt ist. Zwar wird auch hierfür eine Lösung in der WO 99/16650 angegeben, allerdings ist dann ein sehr hoch auflösender Winkelgeber erforderlich, der seinerseits sehr teuer ist.

Es ist daher Aufgabe der vorliegenden Erfindung, ein Verfahren sowie ein Regelsystem vorzuschlagen, die es ermöglichen, ganz ohne einen Kraftsensor den zunächst unbekannten Zusammenhang zwischen Aktuatorposition und Aktuatorzuspannkraft zu ermitteln, ohne die oben erwähnten Nachteile.

Diese Aufgabe wird verfahrensmäßig dadurch gelöst, dass

a) der durch die Messwerte der Aktuatorposition definierte Bereich vorab in eine Vielzahl von n Teilbereichen unterteilt wird,
b) jedem Teilbereich softwaretechnisch jeweils zwei Tiefpassfilter m-ter Ordnung zugeordnet werden,
c) aus den Messwerten der Aktuatorposition und des Aktuatordrehmoments eine dem Aktuatorwirkungsgrad $\eta=1$ entsprechende Aktuatorzuspannkraft berechnet wird, wobei die (im voraus bekannten und konstanten mechanischen) Größen Übersetzungsverhältnis der Anordnung zur Umwandlung einer Drehbewegung in eine translatorische Bewegung und Gesamtmassenträgheitsmoment verwendet werden,
d) die Werte der Aktuatorposition und der normierten Aktuatorzuspannkraft denjenigen Filtern zugeführt werden, die zu dem Teilbereich gehören, in den der Aktuatorpositionswert fällt, wobei durch die Filter Mittelwerte der Aktuatorposition $\varphi_{\eta=1,mittel}$ und der dem Aktuatorwirkungsgrad $\eta=1$ entsprechenden Aktuatorzuspannkraft $F_{\eta=1,mittel}$ gebildet werden, und
e) aus den Mittelwerten aller Teilbereiche der unbekannte Zusammenhang zwischen der Aktuatorposition und der dem Aktuatorwirkungsgrad $\eta=1$ entsprechenden Aktuatorzuspannkraft identifiziert wird.

Voraussetzung für das Funktionieren dieses Verfahrens ist, wie in der in der WO 99/16650, eine periodische Anregung, die zweckmäßigerweise als ein auf den Aktuatorzuspannkraft-Sollwert aufmoduliertes Zusatzsignal realisiert wird. Die Frequenz und Amplitude dieses Zusatzsignals werden so gewählt, dass der Aktuator die geforderte Hin- und Herbewegung tatsächlich im Normalbremsbetrieb durchführt, diese Hin- und Herbewegung aber nicht als Bremskraftschwankung vom Fahrer wahrgenommen wird.

Zur Konkretisierung des Erfindungsgedankens wird vorgeschlagen, dass Tiefpassfilter erster Ordnung vorgesehen sind. Tiefpassfilter erster Ordnung arbeiten effektiv und vor allem mit relativ niedrigem Rechenaufwand, so dass die Belastung der der Realisierung des Verfahrens dienenden Recheneinheit niedrig gehalten werden kann.

Die dem Aktuatorwirkungsgrad $\eta=1$ entsprechende Aktuatorzuspannkraft $F_{\eta=1}(\varphi)$ wird nach der Formel:

$$F_{\eta=1}(\varphi) = \frac{M_{Ist} - J\ddot{\varphi}}{i}$$

berechnet, wobei mit $M_{Ist}$ das Aktuatordrehmoment, mit i das Übersetzungsverhältnis der Anordnung zur Umwandlung der Drehbewegung des Elektromotors in eine translatorische Bewegung, mit J das Massenträgheitsmoment und mit $\ddot{\varphi}$ die Aktuatordrehbeschleunigung bezeichnet werden. Die erwähnte Formel ergibt sich aus einer einfachen physikalischen Modellbetrachtung unter Weglassen sämtlicher Reibung. Die Reibung wird durch die aufgeschaltete periodische Hin- und Herbewegung und die Mittelwertbildung durch die Tiefpassfilter aus dem Ergebnis automatisch herausgerechnet.

Der für die Ermittlung eines Aktuatorzuspannkraft-Istwertes für jede gemessene Aktuatorposition verwendete analytische Zusammenhang zwischen Aktuatorposition und Aktuatorzuspannkraft wird durch einen Offsetwert der Aktuatorzuspannkraft ($F_0$), einen Offsetwert der Aktuatorposition ($\varphi_0$), einen Skalierungsfaktor (a) sowie eine vorab zu definierende Beschreibungsfunktion f($\varphi$) nach der Formel:

$$F_{schätz}(\varphi) = F_0 + a \cdot f(\varphi - \varphi_0)$$

beschrieben. Besonders vorteilhaft ist bei dieser analytischen Beschreibung die konstante Anzahl von zunächst unbekannten Parametern $F_0$, $\varphi_0$, a, so dass das Verfahren zur Identifikation des Zusammenhangs für beliebige Funktion f($\varphi$) gleich ausgeführt werden kann.

Für die Ermittlung der den Zusammenhang zwischen Aktuatorposition und Aktuatorzuspannkraft beschreibenden Parameter ($\varphi_0$ $F_0$,a) wird ein Identifikationsverfahren verwendet, dass das folgende Gütekriterium minimiert:

$$E = \sum_{i=0}^{I(\varphi_0)} c_i \cdot (F_{\eta=1,mittel}(i) - F_0)^2 + \sum_{i=I(\varphi_0)}^{I(\varphi_{max})} c_i \cdot ((F_{\eta=1,mittel}(i) - F_0) - a \cdot f(\varphi_{\eta=1,mittel}(i) - \varphi_0))^2 \; ,$$

wobei mit $c_i$ Gewichtungsfaktoren zur unterschiedlichen Gewichtung der Mittelwerte bezeichnet werden. Die Verwendung dieses quadratischen Gütekriteriums erlaubt eine analytische Bestimmung der partiellen Ableitungen bezüglich der unbekannten Parameter, so dass sich die die Parameter beschreibenden Gleichungen einfach ermitteln lassen.

Nach einem vorteilhaften Erfindungsmerkmal werden die Gewichtungsfaktoren so gewählt, dass Mittelwerte, die aus einer größeren Menge an Messdaten gewonnen wurden, stärker in das Identifikationsergebnis eingehen. Durch diese Maßnahme wird die Genauigkeit des Identifikationsverfahrens erhöht, da die aus der größeren Messdatenmenge gewonnenen Mittelwerte genauer sind als die Mittelwerte bzw. Stützpunkte, die nur aus wenigen Messdatenpaaren gebildet wurden.

Eine gute Anpassungsfähigkeit der den Zusammenhang zwischen Aktuatorposition und Aktuatorzuspannkraft beschreibenden, sich langsam (beispielsweise mit der Temperatur) ändernden Parameter wird nach einem weiteren vorteilhaften Erfindungsmerkmal dadurch erreicht, dass die Gewichtungsfaktoren so gewählt werden, dass jüngere Mittelwerte stärker in das Identifikationsergebnis eingehen.

Auch wenn die Aktuatorzuspannkraft aus dem geschätzten Zusammenhang zwischen Aktuatorposition und Aktuatorzuspannkraft mit Hilfe der Wegmessung abgeschätzt werden kann, ist eine Messung der Aktuatorzuspannkraft auf jeden Fall genauer. Wenn also (z.B. aus Genauigkeitsgründen) ein Kraftsensor vorhanden ist, kann der erwähnte Zusammenhang ebenfalls mit dem beschriebenen Verfahren ermittelt werden, allerdings wird dann vorteilhaft statt der dem Aktuatorwirkungsgrad $\eta=1$ entsprechenden Aktuatorzuspannkraft die tatsächlich gemessene Aktuatorzuspannkraft verwendet. Der geschätzte Zusammenhang kann dann z.B. als Rückfallebene dienen, für den Fall, dass der Kraftsensor ausfällt bzw. es können Fehler des Kraftsensors ermittelt werden.

Ein Kompromiss zwischen Kosten und Genauigkeit wird bei einer anderen vorteilhaften Weiterbildung des Erfindungsgegenstandes dadurch erreicht, dass die Aktuatorzuspannkraft in einem vorgegebenen Messbereich mittels eines Kraftsensors gemessen wird und außerhalb dieses Messbereichs die dem Aktuatorwirkungsgrad $\eta=1$ entsprechende Aktuatorzuspannkraft ($F_{\eta=1}$) verwendet wird.

Der Kraftsensor deckt vorzugsweise den Bereich unterhalb eines Zuspannkraftschwellenwertes liegender Aktuatorzuspannkräfte ab. Dieser Bereich wird während des Betriebs der Bremse am häufigsten genutzt. Der "obere" Aktuatorzuspannkraftbereich (z. B. Panikbremsung, Bergschleichabfahrt) wird hingegen nur selten genutzt und etwaige Komforteinbussen (z. B. durch eine ungenau geschätzte Weg/Kraftkennlinie) werden in diesem Kraftbereich eher toleriert.

Da die, wegen der vernachlässigten Reibung für die Schätzung der Aktuatorzuspannkraft erforderliche Hin- und Herbewegung Energie und Verschleiß kostet, ist es sinnvoll, wenn die erwähnte Sinusschwingung nur in dem Messbereich aufmoduliert wird, in dem der Kraftsensor keine Werte liefern kann.

Wird die dem Aktuatorzuspannkraft-Sollwert aufmodulierte Schwingung vom Aktuator aus physikalischen Gründen nicht ausgeführt, sollten die aufgenommenen Messwerte nicht mit in die Schätzung einfließen, da sie die Messung verfälschen würden, da sich die nicht berücksichtigte Reibung nicht mehr herausmittelt. Aus diesem Grund werden die ermittelten Werte der Aktuatorposition und der dem Aktuatorwirkungsgrad η=1 entsprechenden Aktuatorzuspannkraft nur dann den entsprechenden Filtern zugeführt, wenn die aufmodulierte Sinusschwingung in der Bewegung erkennbar ist.

Ist bei einem Neustart des Systems die Weg/Kraftkennlinie völlig unbekannt und liegen auch noch keinerlei Messwerte vor, so ist es sinnvoll, während einer Initialisierungsphase alle Messdaten mit gleichem Gewicht in die Ermittlung der Stützstellen der Kennlinie einfließen zu lassen und erst danach die Tiefpassfilter zu starten. Es ist daher vorgesehen, dass nach einem Neustart des Aktuators eine Initialisierung durchgeführt wird, wobei die sich daraus ergebenden Messdaten einer einfachen Mittelwertbildung unterworfen werden und die gefundenen gemittelten Wertepaare als Anfangswerte für die Tiefpassfilter verwendet werden.

Ein erfindungsgemäßes Regelsystem zum Aufbringen definierter Spannkräfte bei einer mittels eines Aktuators elektrisch betätigbaren Bremse, mit dem das vorhin erwähnte Verfahren realisiert werden kann, besteht im wesentlichen aus einem ersten Regler (Aktuatorzuspannkraftregler), dem als Eingangsgrößen ein den Aktuatorzuspannkraft-Sollwert und ein den Aktuatorzuspannkraft-Istwert repräsentierendes Signal zugeführt werden und dessen Ausgangsgröße einem Aktuatordrehzahl-Sollwert entspricht, einem dem ersten Regler nachgeschalteten zweiten Regler (Aktuatordrehzahlregler), dem als Eingangsgrößen ein dem Aktuatordrehzahl-Sollwert und ein dem Aktuatordrehzahl-Istwert repräsentierendes Signal zugeführt werden und dessen Ausgangsgröße einem Aktuatordrehmoment-Sollwert entspricht, sowie einem dem zweiten Regler nachgeschalteten dritten Regler (Stromregler), dem als Eingangsgrößen ein dem Aktuatordrehmoment-Sollwert und ein dem Motorstrom-Istwert repräsentierendes Signal zugeführt werden und dessen Ausgangsgröße eine Stellgröße zur Einstellung des Istwerts des dem Aktuator zuzuführenden Stromes darstellt, wobei ein Datenreduktionsmodul vorgesehen ist, in dem Wertepaare des Zusammenhangs zwischen Aktuatorposition und Aktuatorzuspannkraft ermittelt werden und dem als Eingangsgrößen der Aktuatorposition-Istwert sowie der Aktuatordrehmoment-Istwert repräsentierende Signale zugeführt werden, ein Kennlinienidentifikationsmodul vorgesehen ist, in dem aus den Wertepaaren der Zusammenhang zwischen Aktuatorposition und Aktuatorzuspannkraft ermittelt wird, und ein Transformationsmodul vorgesehen ist, in dem mittels des im Kennlinienidentifikationsmodul ermittelten Zusammenhangs aus dem aktuellen Aktuatorpositionsmesswert ein dieser Position entsprechender Aktuatorzuspannkraft-Istwert berechnet wird, der dem Aktuatorzuspannkraftregler zugeführt wird.

Das erfindungsgemäße Regelsystem zeichnet sich dadurch aus, dass im Datenreduktionsmodul der durch die Messwerte der Aktuatorposition definierte Bereich vorab in eine Vielzahl von n Teilbereichen unterteilt wird, wobei jedem Teilbereich softwaretechnisch jeweils zwei Tiefpaßfilter m-ter Ordnung zugeordnet werden, und aus den Messwerten der Aktuatorposition und des Aktuatordrehmoments eine dem Aktuatorwirkungsgrad η = 1 entsprechende Zuspannkraft berechnet wird, wobei das Übersetzungsverhältnis der Anordnung zur Umwandlung einer Drehbewegung in eine translatorische Bewegung und das Gesamtmassenträgheitsmoment verwendet werden, und wobei die Werte der Aktuatorposition und der dem Aktuatorwirkungsgrad η = 1 entsprechenden Aktuatorzuspannkraft denjenigen Filtern zugeführt werden, die zu dem Teilbereich gehören, in den der Aktuatorpositionswert fällt und durch die Filter Mittelwerte der Aktuatorposition und der dem Aktuatorwirkungsgrad η = 1 entsprechenden Aktuatorzuspannkraft gebildet werden, und dass im Kennlinienidentifikationsmodul aus den Mittelwerten aller Teilbereiche der unbekannte Zusammenhang zwischen der Aktuatorposition und der Aktuatorzuspannkraft identifiziert wird.

Durch die genannten Maßnahmen wird das Verfahren bei seiner Realisierung in die drei verschiedenen Module unterteilt, die, jedes für sich, eine abgeschlossene Funktion erfüllen und so unabhängig voneinander entwickelt und gewartet werden können.

Eine vorteilhafte Weiterbildung des erfindungsgemäßen Regelsystems besteht darin, dass das Datenreduktionsmodul sowie das Transformationsmodul in Echtzeit derart abgearbeitet werden, dass jeder anfallende Messwert im Datenreduktionsmodul berücksichtigt wird und zu jeder gemessenen Aktuatorposition auch ein entsprechender Aktuatorzupannkraftwert berechnet wird. Dadurch wird erreicht, dass tatsächlich jedes Messwertpaar in die Kennlinienschätzung einfließt.

Die eigentliche Schätzung, d.h. die Bestimmung der die Kennlinie beschreibenden Parameter ist sehr rechenintensiv und sollte somit vorteilhaft im Hintergrund gerechnet werden, zumal die Neubestimmung von Parametern nur sinnvoll ist, wenn vorher genügend neue Messwerte angefallen sind. Es ist somit sinnvoll, wenn das Kennlinienidentifikationsmodul in der außerhalb des Regelprozesses zur Verfügung stehenden Zeit abgearbeitet wird.

Bei einer vorteilhaften Weiterbildung des erfindungsgemäßen Regelsystems wird dem Datenreduktionsmodul als weitere Eingangsgröße ein mittels eines Kraftsensors ermittelter Aktuatorzuspannkraft-Messwert zugeführt, der im gültigen Messbereich die Ermittlung der Wertepaare des Zusammenhangs zwischen Aktuatorposition und Aktuatorzuspannkraft unterstützt. Dabei wird vorzugsweise als Regelgröße ein Aktuatorzuspannkraft-Istwert verwendet, der sich aus der Summe des mit einem Gewichtungsfaktor k (0<=k<=1) gewichteten Aktuatorzuspannkraft-Messwertes und des mit einem Faktor (1-k) gewichteten, mittels des Transformationsmoduls berechneten Aktuatorzuspannkraft-Istwertes ergibt.

Eine stoßfreie Umschaltung zwischen der reinen Messung und der reinen Schätzung wird dadurch erreicht, dass der Gewichtungsfaktor k im unteren Messbereich des Kraftsensors auf 1 gesetzt wird und im oberen Messbereich linear bis auf 0 abnimmt.

Weitere Einzelheiten, Merkmale und Vorteile der Erfindung gehen aus der nachfolgenden Beschreibung eines Ausführungsbeispiels unter Bezugnahme auf die beiliegende Zeichnung hervor. In der Zeichnung zeigt:

Fig. 1 eine erste Ausführung eines zur Durchführung des erfindungsgemäßen Verfahrens verwendbaren Regelsystems,

Fig. 2 eine zweite Ausführung eines zur Durchführung des erfindungsgemäßen Verfahrens verwendbaren Regelsystems,

Fig. 3 den Aufbau eines im Regelsystem gemäß Fig. 1 verwendeten Datenreduktionsmoduls; und

Fig. 4 eine diagrammatische Darstellung der Abhängigkeit der Aktuatorzuspannkraft von der Aktuatorposition zur Erläuterung des erfindungsgemäßen Verfahrens.

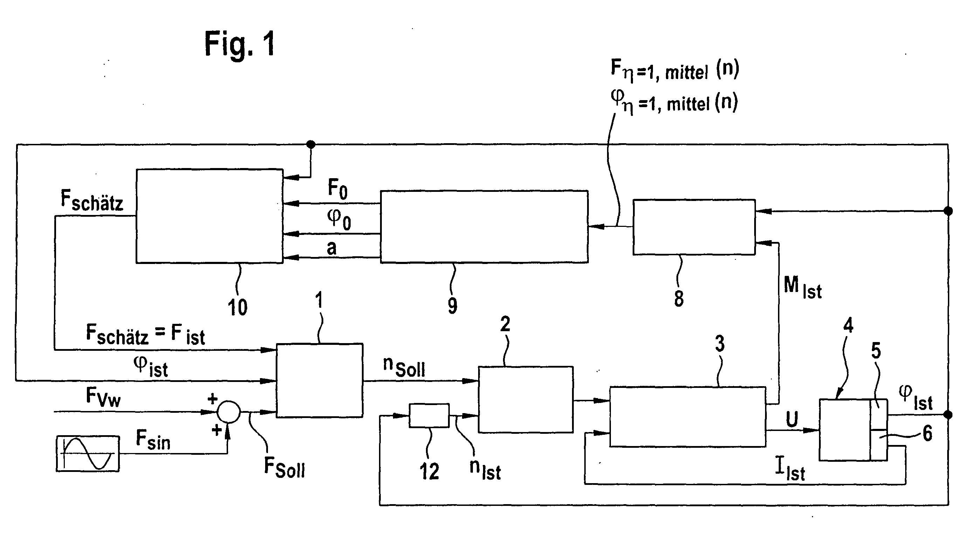

Das in Fig. 1 dargestellte Regelsystem besteht im wesentlichen aus einem ersten Regler bzw. Aktuatorzuspannkraftregler 1, einem dem Aktuatorzuspannkraftregler 1 nachgeschalteten zweiten Regler bzw. Aktuatordrehzahlregler 2, sowie einem dem Aktuatordrehzahlregler 2 nachgeschalteten dritten Regler bzw. Stromregler 3, mit einem integrierten Servoverstärker, der eine Spannung U erzeugt, die an einen lediglich schematisch angedeuteten Aktuator 4 einer elektromechanisch betätigbaren Bremse angelegt wird. Der Aktuator 4 besteht im wesentlichen aus einem Elektromotor sowie einer Anordnung zur Umwandlung der Drehbewegung des Elektromotors in eine translatorische Bewegung, wobei das Übersetzungsverhältnis der Anordnung mit i und ein Gesamtmassenträgheitsmoment des Aktuators 4 mit J bezeichnet werden. Ein zweites Ausgangssignal des Stromreglers 3 repräsentiert einen Aktuatordrehmoment-Istwert $M_{Ist}$. Der Aktuator 4 ist vorzugsweise mit einem Positionsmeßsystem 5 sowie einem Stromsensor 6 ausgestattet. Das die gemessene Aktuatorposition repräsentierende Ausgangssignal $\varphi_{Ist}$ des Positionsmeßsystems 5 sowie das den Aktuatordrehmoment-Istwert repräsentierende Signal $M_{Ist}$ werden als Eingangsgrößen einem Datenreduktionsmodul 8 zugeführt. Das dem Aktuatorstrom-Istwert entsprechende Signal $I_{Ist}$ des Stromsensors 6 wird als Eingangsgröße dem vorhin erwähnten Stromregler 3 zugeführt. Im Datenreduktionsmodul 8 werden Wertepaare eines Zusammenhangs zwischen der Aktuatorposition $\varphi_{\eta=1,mittel}$ (n) und der gesuchten Aktuatorzuspannkraft $F_{\eta=1,mittel}$ (n) ermittelt, die einem Kennlinienidentifikationsmodul 9 zugeführt werden. Im Kennlinienidentifikationsmodul 9 wird aus den Wertepaaren der erwähnte Zusammenhang zwischen Aktuatorposition und Aktuatorzuspannkraft ermittelt, wobei Parameter $F_0$, $\varphi_0$ und a errechnet werden, die einem Offsetwert der Aktuatorzuspannkraft, einem Offsetwert der Aktuatorposition sowie einem Skalierungsfaktor entsprechen. Mit diesen Parametern, einer vorher definierten Beschreibungsfunktion sowie dem Aktuatorposition-Istwert $\varphi_{Ist}$ wird in einem Transformationsmodul 10 der gesuchte Zusammenhang nach der Formel:

$$F_{schätz}(\varphi) = F_0 + a \cdot f(\varphi - \varphi_0)$$

berechnet.

Die berechnete Aktuatorzuspannkraft $F_{schätz}(\varphi)$, der am Aktuator 4 gemessene Aktuatorposition-Istwert $\varphi_{Ist}$ sowie ein Aktuatorzuspannkraft-Sollwert $F_{Soll}$ werden als Eingangsgrößen dem ersten Regler 1 zugeführt. Der Aktuatorzuspannkraft-Sollwert $F_{Soll}$ besteht dabei vorzugsweise aus einem durch den Fahrer vorgebbaren, dem Fahrerverzögerungswunsch entsprechenden ersten Wert $F_{Vw}$ sowie einem überlagerten, der Hin- und Herbewegung des Aktuators 4 entsprechenden, sich periodisch ändernden zweiten Wert $F_{sin}$, die in einer Additionsstelle 11 addiert werden.

Außerdem ist Fig. 1 zu entnehmen, dass die Ausgangsgröße $n_{Soll}$ des ersten bzw. des Aktuatorzuspannkraftreglers 1, die einem Aktuatordrehzahl-Sollwert entspricht, als erste Eingangsgröße dem Aktuatordrehzahlregler 2 zugeführt wird. Seine zweite Eingangsgröße wird durch einen Aktuatordrehzahl-Istwert $n_{Ist}$ gebildet, der durch zeitliches Differenzieren des vorhin erwähnten Aktuatorposition-Istwertes $\varphi_{Ist}$ in einem Differenzierer gewonnen wird, der mit dem Bezugszeichen 12 versehen ist. Die dem Aktuatordrehmoment-Sollwert $M_{Soll}$ entsprechende Ausgangsgröße des zweiten Reglers 2 wird schließlich als zweite Eingangsgröße dem dritten Regler 3 bzw. dem Stromregler zugeführt.

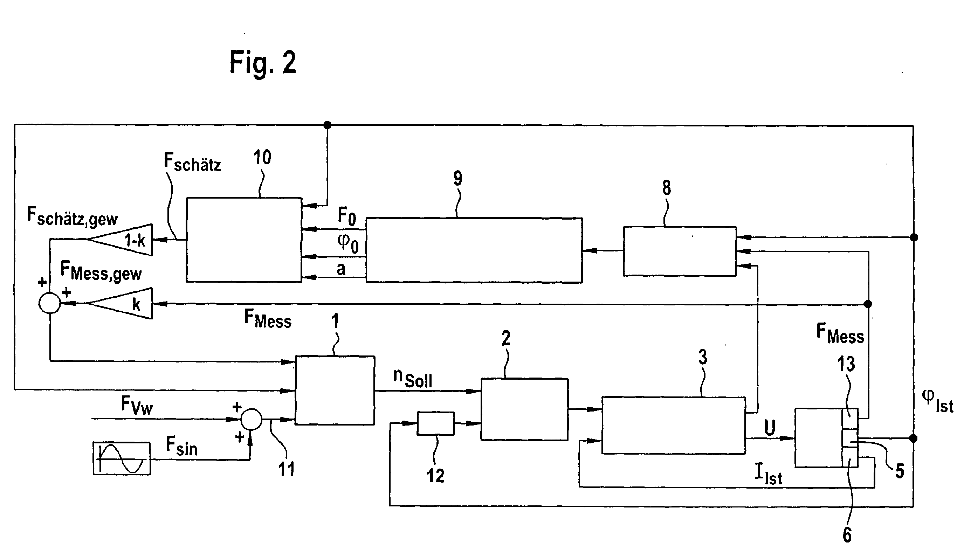

Die in Fig. 2 dargestellte zweite Ausführung des erfindungsgemäßen Regelsystems entspricht weitgehend der ersten Ausführung, die im Zusammenhang mit Fig. 1 erläutert wurde.

Dabei sind die bereits erwähnten Bestandteile mit dem gleichen Bezugszeichen versehen. Der Unterschied gegenüber dem in Fig. 1 gezeigten Regelsystem besteht darin, daß der Aktuator 4 mit einem Kraftsensor 13 versehen ist, mit dem die vom Aktuator 4 aufgebrachte Zuspannkraft $F_{mess}$ ermittelt wird. Das die Aktuatorzuspannkraft $F_{mess}$ repräsentierende Signal wird als eine dritte Eingangsgröße dem Datenreduktionsmodul 8 zugeführt, wobei der Kraftsensor 13 während des Regelvorgangs einen vorgegebenen Meßbereich, der "kleine" Aktuatorzuspannkraftwerte umfaßt, abdeckt. Dabei wird das die Aktuatorzuspannkraft $F_{mess}$ repräsentierende Signal mit einem ersten verstellbaren Verstärkungsfaktor k multipliziert bzw. "gewichtet" ($F_{mess,gew}$), der durch das Symbol 14 angedeutet ist, während die Ausgangsgröße $F_{schätz}$ des Transformationsmoduls 10 mit einem zweiten verstellbaren Verstärkungsfaktor 1-k multipliziert bzw. "gewichtet" wird ($F_{schätz,gew}(\varphi)$), der durch das Symbol 15 angedeutet ist. Dem vorhin erwähnten Aktuatorzuspannkraftregler 1 wird dann als Eingangsgröße ein Aktuatorzuspannkraft-Istwert $F_{Ist}(\varphi)$ zugeführt, der durch die Summe $F_{mess,gew} + F_{schätz,gew}(\varphi)$ gebildet ist. Wie bereits oben erwähnt wurde, wird der Verstärkungs- bzw. Gewichtungsfaktor k im unteren Meßbereich des Kraftsensors 13 auf "1" gesetzt und nimmt im oberen Meßbereich linear bis auf "0" (am oberen Ende des Meßbereichs) ab.

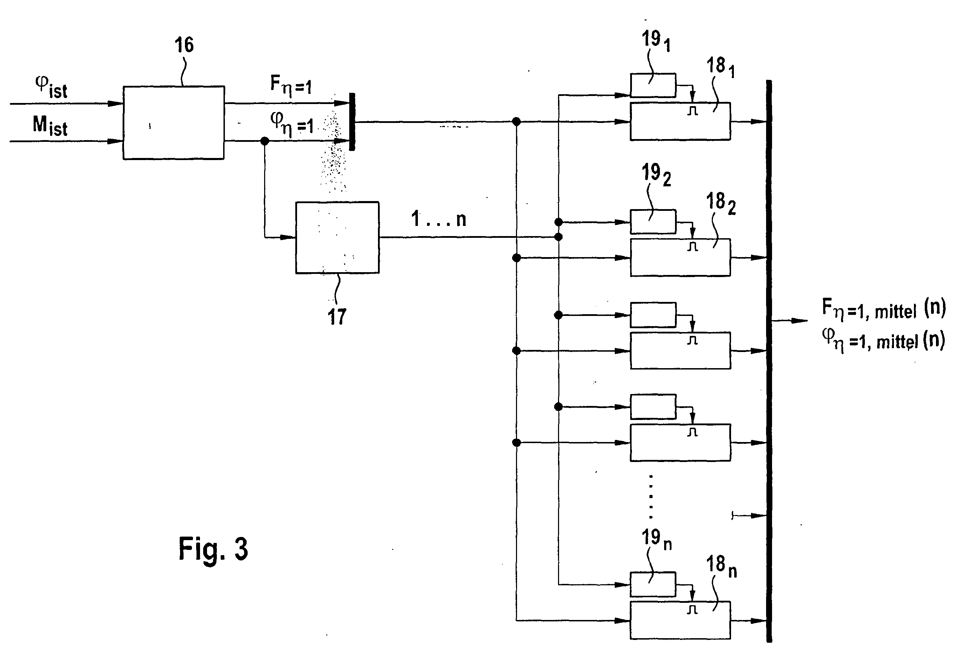

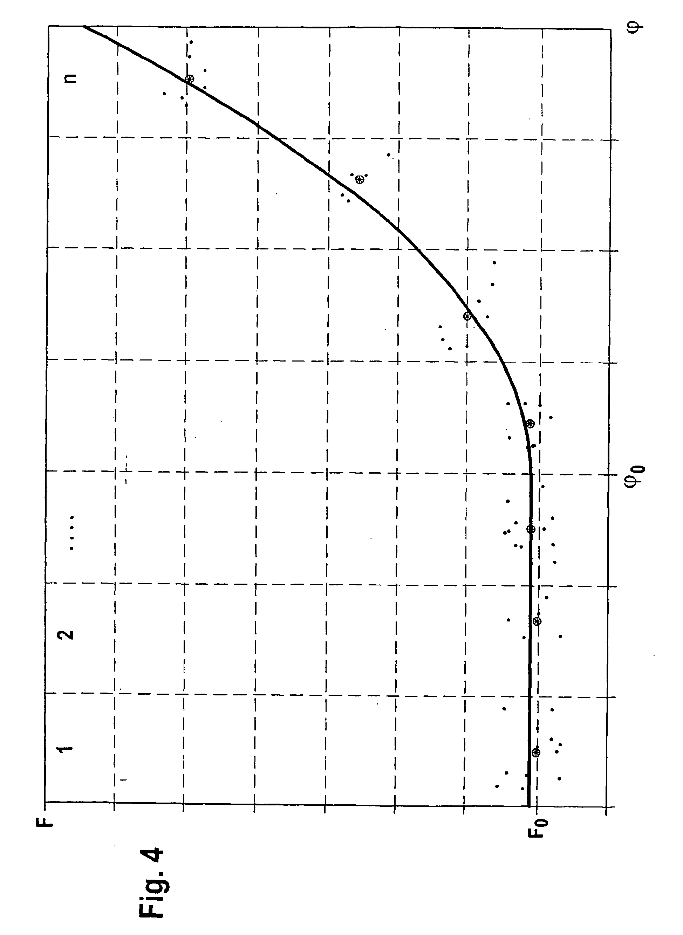

Wie bereits oben angedeutet, wird das erfindungsgemäße Verfahren im Datenreduktionsmodul 8 durchgeführt, dessen Aufbau in Fig. 3 dargestellt ist. Für die Durchführung des Verfahrens wird der durch die Meßwerte der Aktua-torposition $\varphi_{Ist}$ definierte Bereich vorab in n Teilbereiche unterteilt, die in Fig. 4 dargestellt sind. Aus den im Zusammenhang mit Fig. 1 erwähnten Wertepaaren $M_{Ist}$, $\varphi_{Ist}$ werden in einem ersten Funktionsblock 16, in dem die beiden Eingangssignale gefiltert werden und ein der Aktuatordrehbeschleunigung entsprechendes Signal $\ddot{\varphi}$ erzeugt wird, eine dem Aktuatorwirkungsgrad η=1 entsprechende Aktuatorzuspannkraft $F_{\eta=1}$ nach der Formel:

$$F_{\eta=1}(\varphi) = \frac{M_{Ist} - J\ddot{\varphi}}{i}$$

sowie eine dem Aktuatorwirkungsgrad η=1 entsprechende Aktuatorposition $\varphi_{\eta=1}$ berechnet, wobei die Bedeutung der verwendeten Bezeichnungen bereits erläutert wurde. Die genannten Größen $F_{\eta=1}$, $\varphi_{\eta=1}$ werden den vorhin erwähnten Teilbereichen 1...n zugeordneten Tiefpassfilterpaaren zugeführt, die mit den Bezugszeichen $18_1$, $18_2$...$18_n$ versehen sind. Gleichzeitig wird das Ausgangssignal $\varphi_{\eta=1}$ des Funktionsblocks 16, das die dem Aktuatorwirkungsgrad η=1 entsprechende Aktuatorposition repräsentiert, einem zweiten Funktionsblock 17 zugeführt. Der zweite Funktionsblock 17 dient der Bestimmung des Teilbereichs, dessen Ausgangsgröße einer Zahl entspricht, die den Teilbereich identifiziert, der der dem Aktuatorwirkungsgrad η=1 entsprechenden Aktuatorposition zugeordnet ist. Die Zahl wird den Filterpaaren $18_1$, $18_2$...$18_n$ zugeordneten Filteraktivierungsblöcken $19_1$, $19_2$...$19_n$ zugeordnet, die jeweils das ausgewählte Filterpaar aktivieren. Die Ausgangsgrößen der Filterpaare $18_1$, $18_2$...$18_n$ sind die bereits erwähnten gemittelten Wertepaare $F_{\eta=1,mittel}$ und $\varphi_{\eta=1,mittel}$.

Fig. 4 dient schließlich der diagrammatischen Darstellung des erfindungsgemäßen Verfahrens, wobei auf der x-Achse Werte der dem Aktuatorwirkungsgrad η=1 entsprechenden Aktuatorposition $\varphi_{\eta=1}$ und auf der y-Achse Werte der dem Aktuatorwirkungsgrad η=1 entsprechenden Aktuatorzuspannkraft $F_{\eta=1}$ aufgetragen sind. Die in jedem der Teilbereiche 1...n eingezeichneten "schwarzen" Punkte entsprechen den vorhin erwähnten, berechneten Wertepaaren $F_{\eta=1}$, $\varphi_{\eta=1}$, während die mit * bezeichneten Werte die durch die Filterpaare $18_1$,... $18_n$ gemittelten Wertepaare $F_{\eta=1,mittel}$, $\varphi_{\eta=1,mittel}$ darstellen. Die durchgezogene Kurve stellt schließlich die durch das erfindungsgemäße Verfahren ermittelte Kraft/Position-Kennlinie des Aktuators dar, wobei die Bedeutung der Bezeichnungen $F_0$, und $\varphi_0$ im vorhergehenden Text erläutert wurde. Der ebenso vorhin erläuterte Skalierungsfaktor a entspricht der Steigung der Kennlinie für $\varphi > \varphi_0$, die im gezeigten Beispiel als eine Parabel gewählt wurde.

**Patentansprüche**

1. Verfahren zur Ermittlung des Zusammenhangs zwischen Aktuatorposition und Aktuatorzuspannkraft bei einer mittels eines elektromechanischen Aktuators betätigbaren Bremse, wobei der Aktuator aus einem Elektromotor sowie einer dem Elektromotor nachgeschalteten Anordnung zur Umwandlung einer Drehbewegung in eine translatorische Bewegung besteht, und wobei das vom Aktuator aufgebrachte Drehmoment durch die Messung des dem Elektromotor zugeführten Stroms bestimmt wird und die Aktuatorposition gemessen wird und der Aktuatorbewegung eine Sinusschwingung kleiner Amplitude aufmoduliert wird,
   **dadurch gekennzeichnet, dass**

a) der durch die Messwerte der Aktuatorposition definierte Bereich vorab in eine Vielzahl von n Teilbereichen unterteilt wird,

b) jedem Teilbereich softwaretechnisch jeweils zwei Tiefpaßfilter m-ter Ordnung zugeordnet werden,

c) aus den Messwerten der Aktuatorposition und des Aktuatordrehmoments eine dem Aktuatorwirkungsgrad $\eta = 1$ entsprechende Zuspannkraft berechnet wird, wobei das Übersetzungsverhältnis der Anordnung zur Umwandlung einer Drehbewegung in eine translatorische Bewegung und das Gesamtmassenträgheitsmoment verwendet werden,

d) die Werte der Aktuatorposition und der dem Aktuatorwirkungsgrad $\eta = 1$ entsprechenden Aktuatorzuspannkraft ($F_{\eta=1}$)denjenigen Filtern zugeführt werden, die zu dem Teilbereich gehören, in den der Aktuatorpositionswert fällt, wobei durch die Filter Mittelwerte der Aktuatorposition ($\varphi_{\eta=1,mittel}(i)$) und der dem Aktuatorwirkungsgrad $\eta = 1$ entsprechenden Aktuatorzuspannkraft ($F_{\eta=1,mitteil}(i)$) gebildet werden, und

e) aus den Mittelwerten aller Teilbereiche der unbekannte Zusammenhang zwischen der Aktuatorposition und der Aktuatorzuspannkraft identifiziert wird.

2. Verfahren nach Anspruch 1 **dadurch gekennzeichnet, dass** Tiefpaßfilter erster Ordnung vorgesehen sind.

3. Verfahren nach Anspruch 1 oder 2 **dadurch gekennzeichnet, dass** die dem Aktuatorwirkungsgrad $\eta=1$ entsprechende Aktuatorzuspannkraft nach der Formel:

$$F_{\eta=1}(\varphi) = \frac{M_{Ist} - J\ddot{\varphi}}{i}$$

berechnet wird, wobei mit $M_{Ist}$ das Aktuatordrehmoment, mit i das Übersetzungsverhältnis der Anordnung zur Umwandlung der Drehbewegung des Elektromotors in eine translatorische Bewegung, mit J das Gesamtmassenträgheitsmoment des Aktuators und mit $\ddot{\varphi}$ die Aktuatordrehbeschleunigung bezeichnet werden.

4. Verfahren nach der Ansprüchen 1 bis 3 **dadurch gekennzeichnet, dass** der Zusammenhang zwischen Aktuatorposition ($\varphi$) und der entsprechenden Aktuatorzuspannkraft ($F_{schätz}(\varphi)$) analytisch durch einen Offsetwert der Aktuatorzuspannkraft $F_0$, einen Offsetwert der Aktuatorposition $\varphi_0$, einen Skalierungsfaktor a sowie eine vorab zu definierende Beschreibungsfunktion $f(\varphi)$ nach der Formel

$$F_{schätz}(\varphi) = F_0 + a \cdot f(\varphi - \varphi_0)$$

beschrieben wird.

5. Verfahren nach Anspruch 4 **dadurch gekennzeichnet, dass** für die Ermittlung der den Zusammenhang zwischen Aktuatorposition und der Aktuatorzuspannkraft beschreibenden Parameter ($\varphi_0$, $F_0$, a) ein Identifikationsverfahren verwendet wird, dass das folgende Gütekriterium minimiert

$$E = \sum_{i=0}^{I(\varphi_0)} c_i \cdot (F_{\eta=1,mittel}(i) - F_0)^2 + \sum_{i=I(\varphi_0)}^{I(\varphi_{max})} c_i \cdot ((F_{\eta=1,mittel}(i) - F_0) - a \cdot f(\varphi_{\eta=1,mittel}(i) - \varphi_0))^2$$

,

wobei mit $c_i$ Gewichtungsfaktoren zur unterschiedlichen Gewichtung der Mittelwerte bezeichnet werden.

6. Verfahren nach Anspruch 5 **dadurch gekennzeichnet, dass** die Gewichtungsfaktoren ($c_i$) so gewählt werden, dass Mittelwerte, die aus einer größeren Menge an Messdaten gewonnen wurden, stärker in das Identifikationsergebnis eingehen.

7. Verfahren nach Anspruch 5 oder 6 **dadurch gekennzeichnet, dass** die Gewichtungsfaktoren so gewählt werden, dass jüngere Mittelwerte stärker in das Identifikationsergebnis eingehen.

8. Verfahren nach Anspruch 1,2,4,5,6 oder 7 **dadurch gekennzeichnet, dass** die Aktuatorzuspannkraft ($F_{Ist}$) in einem vorgegebenen Messbereich mit Hilfe eines Kraftsensors gemessen wird und statt der dem Aktuatorwirkungsgrad $\eta = 1$ entsprechenden Aktuatorzuspannkraft ($F_{\eta=1}$) bei der Berechnung verwendet wird.

9. Verfahren nach Anspruch 8 **dadurch gekennzeichnet, dass** außerhalb des vorgegebenen Messbereichs die dem Aktuatorwirkungsgrad $\eta = 1$ entsprechende Aktuatorzuspannkraft ($F_{\eta=1}$) verwendet wird.

10. Verfahren nach Anspruch 9 **dadurch gekennzeichnet, dass** der Kraftsensor den Bereich unterhalb eines Zuspannkraftschwellenwertes liegender Aktuatorzuspannkräfte abdeckt.

11. Verfahren nach einem der Ansprüche 9 oder 10 **dadurch gekennzeichnet, dass** die Sinusschwingung nur in dem Messbereich aufmoduliert wird, in dem der Kraftsensor keine Werte liefern kann.

12. Verfahren nach einem der Ansprüche 1 bis 11 **dadurch gekennzeichnet, dass** die ermittelten Werte der Aktuatorposition und der dem Aktuatorwirkungsgrad $\eta=1$ entsprechenden Aktuatorzuspannkraft nur dann den entsprechenden Filtern zugeführt werden, wenn die aufmodulierte Sinusschwingung in der Bewegung erkennbar ist.

13. Verfahren nach einem der vorhergehenden Ansprüche **dadurch gekennzeichnet, dass** nach einem Neustart des Aktuators eine Initialisierung durchgeführt wird, wobei die sich daraus ergebenden Messdaten einer einfachen Mittelwertbildung unterworfen werden und die gefundenen gemittelten Wertepaare als Anfangswerte für die Tiefpassfilter verwendet werden.

14. Regelsystem zum Aufbringen definierter Spannkräfte bei einer mittels eines Aktuators elektrisch betätigbaren Bremse mit einem ersten Regler dem als Eingangsgrößen ein den Spannkraftsollwert ($F_{soll}$) und ein den Spannkraftistwert ($F_{ist}$) repräsentierendes Signal zugeführt werden und dessen Ausgangsgröße einem Aktuatordrehzahl-Sollwert ($n_{soll}$) entspricht, einem dem ersten Regler nachgeschalteten zweiten Regler dem als Eingangsgrößen ein dem Aktuatordrehzahl-Sollwert ($n_{soll}$) und ein dem Aktuatordrehzahl-Istwert ($n_{ist}$) repräsentierendes Signal zugeführt werden und dessen Ausgangsgröße einem Aktuatordrehmoment-Sollwert ($M_{soll}$) entspricht, sowie einem dem zweiten Regler nachgeschalteten dritten Regler dem als Eingangsgrößen ein den Aktuatordrehmoment-Sollwert ($M_{soll}$) und ein den Istwert ($I_{Ist}$) des dem Aktuator zuzuführenden Stromes repräsentierendes Signal zugeführt werden und dessen Ausgangsgröße eine Stellgröße ($U$) zur Einstellung des Istwerts ($I_{Ist}$) des dem Aktuator zuzuführenden Stromes darstellt, wobei ein Datenreduktionsmodul (8) vorgesehen ist, in dem Wertepaare ($F_{\eta=1,mittel}(1)$, $\varphi_{\eta=1,mittel}(1)$) des Zusammenhangs zwischen Aktuatorposition ($\varphi$) und Aktuatorzuspannkraft ($F$) ermittelt werden und dem als Eingangsgrößen der Aktuatorposition-Istwert ($\varphi_{Ist}$) sowie der Aktuatordrehmoment-Istwert ($M_{Mot}$) repräsentierende Signale zugeführt werden, ein Kennlinienidentifikationsmodul (9) vorgesehen ist, in dem aus den Wertepaaren ($F_{\eta=1,mittel}(i)$, $\varphi_{\eta=1,mittel}(i)$) die den Zusammenhang zwischen Aktuatorposition ($\varphi$) und Aktuatorzuspannkraft ($F$) beschreibenden Parameter $F_0$, $\varphi_0$, $a$ ermittelt werden, wobei mit $F_0$ ein Offsetwert der Aktuatorzuspannkraft, mit $\varphi_0$ ein Offsetwert der Aktuatorposition, und mit $a$ ein Skalierungsfaktor bezeichnet werden, und ein Transformationsmodul (10) vorgesehen ist, in dem mittels des im Kennlinienidentifikationsmodul (9) ermittelten Zusammenhangs aus dem Aktuatorposition-Istwert ($\varphi_{Ist}$) ein dieser Position entsprechender Aktuatorzupannkraft-Istwert ($F_{schätz}(\varphi)$) berechnet wird, der dem Spannkraftregler (1) zugeführt wird, **dadurch gekennzeichnet, dass** im Datenreduktionsmodul (8) der durch die Messwerte der Aktuatorposition definierte Bereich vorab in eine Vielzahl von n Teilbereichen unterteilt wird, wobei jedem Teilbereich softwaretechnisch jeweils zwei Tiefpaßfilter m-ter Ordnung zugeordnet werden, und aus den Messwerten der Aktuatorposition und des Aktuatordrehmoments eine dem Aktuatorwirkungsgrad $\eta = 1$ entsprechende Zuspannkraft berechnet wird, wobei das Übersetzungsverhältnis der Anordnung zur Umwandlung einer Drehbewegung in eine translatorische Bewegung und das Gesamtmassenträgheitsmoment verwendet werden, und wobei die Werte der Aktuatorposition und der dem Aktuatorwirkungsgrad $\eta = 1$ entsprechenden Aktuatorzuspannkraft ($F_{\eta=1}$) denjenigen Filtern zugeführt werden, die zu dem Teilbereich gehören, in den der Aktuatorpositionswert fällt und durch die Filter Mittelwerte der Aktuatorposition ($\varphi_{n=1,mittel}(i)$) und der dem Aktuatorwirkungsgrad $\eta = 1$ entsprechenden Aktuatorzuspannkraft ($F_{\eta=1,mittel}(i)$) gebildet werden, und dass im Kennlinienidentifikationsmodul (9) aus den Mittelwerten aller Teilbereiche der unbekannte Zusammenhang zwischen der Aktuatorposition und der Aktuatorzuspannkraft identifiziert wird.

15. Regelsystem nach Anspruch 14 **dadurch gekennzeichnet, dass** das Datenreduktionsmodul sowie das Transformationsmodul in Echtzeit derart abgearbeitet werden, dass jeder anfallende Messwert im Datenreduktionsmodul berücksichtigt wird und zu jeder gemessenen Position auch ein entsprechender Spannkraftwert berechnet wird.

**16.** Regelsystem nach Anspruch 14 **dadurch gekennzeichnet, dass** das Kennlinienidentifikationsmodul in der außerhalb des Regelprozesses zur Verfügung stehenden Zeit abgearbeitet wird.

**17.** Regelsystem nach Anspruch 14 bis 16 **dadurch gekennzeichnet, dass** dem Datenreduktionsmodul als weitere Eingangsgröße ein mittels eines Kraftsensors (14) ermittelter Aktuatorzuspannkraftmesswert zugeführt wird, der im gültigen Messbereich die Ermittlung der Wertepaare des Zusammenhangs zwischen Aktuatorposition und Aktuatorzuspannkraft unterstützt.

**18.** Regelsystem nach Anspruch 17 **dadurch gekennzeichnet, dass** als Regelgröße ein Aktuatorzuspannkraft-Istwert ($F_{Ist}$) verwendet wird, der sich aus der Summe des mit einem Gewichtungsfaktor k gewichteten Aktuatorzuspannkraft-Messwertes ($F_{mess,gew}$) und des mit einem Faktor (1-k) gewichteten, mittels des Transformationsmoduls (10) berechneten Aktuatorzuspannkraft-Istwertes ($F_{schätz, gew}$) ergibt.

**19.** Regelsystem nach Anspruch 18 **dadurch gekennzeichnet, dass** der Gewichtungsfaktor k im unteren Messbereich des Kraftsensors (14) auf 1 gesetzt wird und im oberen Messbereich linear bis auf 0 abnimmt.

**Claims**

**1.** Method for establishing the relationship between actuator position and actuator clamping force for a brake which can be operated by an electromechanical actuator, wherein the actuator consists of an electric motor and an arrangement inserted after the electric motor to convert a rotational movement into a translation, the torque created by the actuator being determined by measurement of the electrical current fed into the electric motor and the actuator position being measured and a sinusoidal oscillation of small amplitude being superimposed on the actuator movement, **characterized in that**

a) the range defined by the measured values of the actuator position is divided into a plurality of n partial ranges beforehand,
b) two software-based low-pass filters of $m^{th}$ degree are assigned to each partial range,
c) a clamping force corresponding to the actuator efficiency degree $\eta = 1$ is calculated from the measured values for the actuator position and the actuator torque, where the transmission ratio of the arrangement for conversion of a rotational movement into a translation and an overall moment of inertia are used,
d) the values of the actuator position and the actuator clamping force ($F_{\eta=1}$) corresponding to the actuator efficiency degree $\eta = 1$ are fed to those filters that belong to that partial range where the actuator position value is situated, with mean values of the actuator position ($\varphi_{\eta=1, mean}$ (i)) and the actuator clamping force ($F_{\eta=1}$, mean (i)) corresponding to the actuator efficiency degree $\eta = 1$ being formed by the filters, and
e) the unknown relationship between the actuator position and the actuator clamping force is identified from the mean values of all partial ranges.

**2.** Method according to claim 1, **characterized in that** low-pass filters of first order are used.

**3.** Method according to claim 1 or 2, **characterized in that** the actuator clamping force corresponding to the actuator efficiency degree $\eta = 1$ is calculated using the formula

$$F_{\eta=1}\left(\varphi\right) = \frac{M_{Act} - J\ddot{\varphi}}{i}$$

where $M_{actual}$ indicates the actuator torque, i represents the transmission ratio of the arrangement for the conversion of the rotational movement of the electric motor into a translation, J represents the overall mass moment of inertia of the actuator and $\ddot{\varphi}$ represents the actuator rotational acceleration.

**4.** Method according to claims 1 to 3, **characterized in that** the relationship between the actuator position (($\varphi$) and the corresponding actuator clamping force ($F_{estim}(\varphi)$) is described analytically by an offset value of the actuator clamping force $F_o$, an offset value of the actuator position ($\varphi_o$, a scaling factor a and a describing function to be

defined beforehand f ($\varphi$) with the formula

$$F_{estim}(\varphi) = F_0 + a \cdot f(\varphi - \varphi_0) \; .$$

5. Method according to claim 4, **characterized in that** an identification process that minimizes the following quality criterion is used for the calculation of the parameters ($\varphi_0$, $F_0$, a) describing the relationship between actuator position and actuator clamping force:

$$E = \sum_{i=0}^{I(\varphi_0)} c_i \cdot (F_{\eta=1,mean}(i) - F_0)^2 + \sum_{i=I(\varphi_0)}^{I(\varphi_{max})} c_i \cdot ((F_{\eta=1,mean}(i) - F_0) - a \cdot f(\varphi_{\eta=1,mean}(i) - \varphi_0))^2$$

where $c_i$ represents weighting factors for different weighting of the mean values.

6. Method according to claim 5, **characterized in that** the weighting factors ($c_i$) are chosen in such a way that mean values that have been gained from a larger quantity of measured data have more influence on the identification result.

7. Method according to claim 5 or 6, **characterized in that** the weighting factors are chosen in such a way that new mean values have more influence on the identification result.

8. Method according to claims 1, 2, 4, 5, 6 or 7, **characterized in that** the actuator clamping force (Factual) is measured within a predetermined measuring range by means of a force sensor and is used for calculation instead of the actuator clamping force ($F_{\eta}$=1) corresponding to the actuator efficiency degree $\eta$ = 1.

9. Method according to claim 8, **characterized in that** outside the predetermined measuring range, the actuator clamping force ($F_{\eta=1}$) corresponding to the actuator efficiency degree $\eta$ = 1 is used.

10. Method according to claim 9, **characterized in that** the force sensor covers the range of actuator clamping forces lying below a clamping force threshold.

11. Method according to any one of claims 9 or 10, **characterized in that** the sinusoidal oscillation can only be superimposed within the measurement range where the force sensor cannot provide any values.

12. Method according to claims 1 to 11, **characterized in that** the established values for the actuator position and the actuator clamping force corresponding to the actuator efficiency degree $\eta$ = 1 are fed into the appropriate filters only if the superimposed sinusoidal oscillation is noticeable in the movement.

13. Method according to any one of the preceding claims, **characterized in that** an initialization is carried out when the actuator is restarted, the resulting measured data being subjected to a simple mean-value generation and the established mean value pairs are used as initial values for the low-pass filter.

14. Control system for applying defined clamping forces on a brake operated electrically by an actuator with a first controller to which a signal representing the nominal value of the clamping force ($F_{nominal}$) and a signal representing the actual value of the actuator clamping force (Factual) are fed as input parameters and the output parameter of which represents a nominal value of the actuator speed ($n_{nominal}$), with a second controller inserted after the first controller to which a signal representing the nominal value of the actuator speed ($n_{nominal}$) and a signal representing the actual value of the actuator speed ($n_{actual}$) are fed as input parameters and the output parameter of which corresponds to a nominal value of the actuator torque ($M_{nominal}$), and with a third controller inserted after the second controller to which a signal representing the nominal value of the actuator torque ($M_{nominal}$) and a signal representing the actual value ($I_{actual}$) of the current to be supplied to the actuator are fed as input parameters and the output parameter of which is a manipulated variable (U) for setting the actual value ($I_{actual}$) of the current to be fed into the actuator, wherein a data reduction module (8) is provided in which value pairs ($F_{\eta=1,mean}$ (i), $\varphi_{\eta=1,mean}$ (i)) of the relationship between actuator position ($\varphi$) and actuator clamping force (F) are determined and to which signals representing the actual value of the actuator position ($\varphi_{actual}$) and the actual value of the actuator torque ($M_{mot}$) are fed as input parameters, wherein a characteristic curve identification module (9) is provided in which the parameters $F_o$, $\varphi_0$, a describing the relationship between the actuator position ($\varphi$) and the actuator clamping force (F) are determined from the value pairs ($F_{\eta=1,mean}$ (i), $\varphi_{\eta=1,mean}$ (i)), where $F_0$ represents an offset value of the actuator clamping force, $\varphi_0$ represents an offset value of the actuator position, and a represents a scaling factor, and a transformation module (10) is provided in which the relationship determined in the characteristic curve identification module (9) is used to calculate from the actual value of the actuator position ($\varphi_{actual}$) an actual value of the actuator clamping force ($F_{estim}(\varphi)$) that corresponds to this position and is fed to the actuator clamping force controller (1), **characterized in that** in the data reduction module (8), the range defined by the measured values of the actuator position is divided into a plurality of n partial ranges beforehand, and two software-based low-pass filters of $m^{th}$ degree are assigned to each partial range, and a clamping force corresponding to the actuator efficiency degree $\eta$ = 1 is calculated from the measured values for the actuator position and the actuator torque, with the transmission ratio of the arrangement for conversion of a rotational movement into a translation and an overall moment of inertia being used, and the values of the actuator position and the actuator clamping force ($F_{\eta=1}$) corresponding to the actuator efficiency degree $\eta$ = 1 are fed to those filters that belong to that partial range where the actuator position value is situated, and with mean values of the actuator position ($\varphi_{\eta=1,\,mean}(i)$) and the actuator clamping force ($F_{\eta=1,\,mean}(i)$) corresponding to the actuator efficiency degree $\eta$ = 1 being formed by the filters, and **in that** the unknown relationship between the actuator position and the actuator clamping force is identified in the characteristic curve identification module (9) from the mean values of all partial ranges.

15. Method according to claim 14, **characterized in that** the data reduction module and the transformation module are processed in real time in such a manner that every occurring measured value in the data reduction module is taken into account and an appropriate actuator clamping value is calculated for each measured actuator position.

16. Method according to claim 14, **characterized in that** the characteristic curve identification module is processed in time available outside the control process.

17. Method according to claims 14 to 16, **characterized in that** an actuator clamping force measured value which assists the determination of the value pairs of the relationship between actuator position and actuator clamping force within the measurement range and which is determined using a force sensor (14) is fed into the data reduction module as further input parameter.

18. Method according to claim 17, **characterized in that** an actuator clamping force actual value (Factual) is used as controlled variable and results from the sum of the actuator clamping force measured value ($F_{meas}$, weighted) weighted with a weighting factor k and an actuator clamping force actual value ($F_{estim,\,weighted}$) calculated by the transformation module (10) with a weighting factor (1-k).

19. Method according to claim 18, **characterized in that** the weighting factor k is set to 1 in the lower measuring range of the force sensor (14) and diminishes by linear degression to 0 in the upper measuring range.

**Revendications**

1. Procédé pour déterminer la relation entre la position d'un actionneur et sa force de serrage dans un frein pouvant être actionné au moyen d'un actionneur électromécanique, l'actionneur étant constitué d'un moteur électrique ainsi que d'un dispositif, monté en aval du moteur électrique, pour transformer un mouvement de rotation en un mouvement de translation, et le couple de rotation appliqué par l'actionneur étant déterminé par la mesure du courant amené au moteur électrique, et la position de l'actionneur étant mesurée, et au mouvement de l'actionneur étant ajoutée de manière modulée une oscillation sinusoïdale de petite amplitude,
**caractérisé en ce que**

a) le domaine défini par les valeurs de mesure de la position de l'actionneur est subdivisé au préalable en un grand nombre de n domaines partiels,
b) à chaque domaine partiel sont affectés par le logiciel deux filtres passe-bas de mième degré,
c) on calcule, à partir des valeurs de mesure de la position de l'actionneur et du couple de rotation de l'actionneur, une force de serrage correspondant au rendement de l'actionneur $\eta$=1, le rapport de transmission du dispositif de transformation d'un mouvement de rotation en un mouvement de translation, et le moment d'inertie de masse global étant utilisé,

d) les valeurs de la position de l'actionneur et de la force de serrage de l'actionneur ($F_{\eta=1}$), correspondant au rendement de l'actionneur $_{\eta=1}$, sont amenées aux filtres qui font partie du domaine partiel dans lequel tombe la valeur de position de l'actionneur, par les filtres étant formées des valeurs moyennes de la position de l'actionneur ($\varphi_{\eta=1,\text{moyenne}}$ (i)) et de la force de serrage de l'actionneur ($F_{\eta=1,\text{moyenne}}$ (i)), correspondant au rendement de l'actionneur $\eta=1$, et

e) à partir des valeurs moyennes de tous les domaines partiels la relation inconnue entre la position de l'actionneur et la force de serrage de l'actionneur est identifiée.

**2.** Procédé selon la revendication 1, **caractérisé en ce que** sont prévus des filtres passe-bas de premier degré.

**3.** Procédé selon la revendication 1 ou 2, **caractérisé en ce que** la force de serrage de l'actionneur correspondant au rendement de l'actionneur $\eta=1$, est calculée suivant la formule

$$F_{\eta=1}(\varphi) = \frac{M_{r\acute{e}el} - J\varphi}{i}$$

dans laquelle $M_{r\acute{e}el}$ est le couple de rotation de l'actionneur, i le rapport de transmission du dispositif pour la transformation du mouvement de rotation du moteur électrique en un mouvement de translation, J le moment d'inertie de masse global de l'actionneur et $\varphi$ est l'accélération de rotation de l'actionneur.

**4.** Procédé selon les revendications 1 à 3, **caractérisé en ce que** la relation entre la position de l'actionneur ($\varphi$) et la force de serrage correspondante de l'actionneur ($F_{\text{estimée}}$ ($\varphi$)) est décrite de manière analytique par une valeur offset de la force de serrage de l'actionneur $F_0$, une valeur offset de la position de l'actionneur $\varphi_0$, un facteur d'échelonnement a ainsi qu'une fonction de description f($\varphi$) à définir au préalable, suivant la formule

$$F_{\text{estimée}}(\varphi) = F_0 + a \cdot f(\varphi - \varphi_0)$$

**5.** Procédé selon la revendication 4, **caractérisé en ce que** pour déterminer les paramètres $\varphi_0$, $F_0$, a) décrivant la relation entre la position de l'actionneur et la force de serrage de l'actionneur, on utilise un procédé d'identification, **en ce qu'**on minimise le critère de qualité suivant

$$E = \sum_{i=0}^{I(\varphi_0)} C_i \cdot (F_{\eta=I,\text{moyenne}}(i) - F_0)^2 + \sum_{i=I(\varphi0)}^{I(\varphi_{max})} C_i \cdot ((F_{\eta=I,\text{moyenne}}(i) - F_0) - a \cdot f(\varphi_{\eta=I,\text{moyen}}(i) - \varphi_0))^2$$

$c_i$ désignant des facteurs de pondération pour la pondération différenciée des valeurs moyennes.

**6.** Procédé selon la revendication 5, **caractérisé en ce que** les facteurs de pondération (ci) sont choisis de manière que des valeurs moyennes, qui ont été obtenues à partir d'une grande quantité de données de mesure, entrent plus fortement dans le résultat de l'identification.

**7.** Procédé selon la revendication 5 ou 6, **caractérisé en ce que** les facteurs de pondération sont choisis de manière que des valeurs moyennes plus récentes entrent plus fortement dans le résultat de l'identification.

**8.** Procédé selon la revendication 1, 2, 4, 5, 6 ou 7, **caractérisé en ce que** la force de serrage de l'actionneur ($F_{r\acute{e}elle}$) est mesurée dans une plage de mesure prédéfinie, à l'aide d'un capteur de force, et est utilisée dans le calcul à la place de la force de serrage de l'actionneur ($F_{\eta=1}$) correspondant au rendement de l'actionneur $\eta=1$.

**9.** Procédé selon la revendication 8, **caractérisé en ce qu'**à l'extérieur de la plage de mesure prédéfinie, on utilise la force de serrage de l'actionneur ($F_{\eta=1}$) correspondant au rendement de l'actionneur $\eta=1$.

**10.** Procédé selon la revendication 9, **caractérisé en ce que** le capteur de force couvre le domaine des forces de serrage de l'actionneur situé au-dessous d'une valeur de seuil de la force de serrage.

**11.** Procédé selon l'une des revendications 9 ou 10, **caractérisé en ce que** l'oscillation sinusoïdale n'est ajoutée de manière modulée que dans la plage de mesure dans laquelle le capteur de force ne peut fournir de valeur.

**12.** Procédé selon l'une des revendications 1 à 11, **caractérisé en ce que** les valeurs déterminées de la position de l'actionneur et de la force de serrage de l'actionneur, correspondant au rendement de l'actionneur $\eta=1$, ne sont envoyées aux filtres correspondants que si l'oscillation sinusoïdale ajoutée de manière modulée est reconnaissable dans le mouvement.

**13.** Procédé selon l'une des revendications précédentes, **caractérisé en ce qu'**après un redémarrage de l'actionneur, il est procédé à une initialisation, les données de mesure en résultant étant soumises à la formation simple d'une valeur moyenne, et les paires de valeurs moyennes trouvées étant utilisées comme valeurs initiales pour les filtres passe-bas.

**14.** Système de régulation pour appliquer des forces de serrage définies dans un frein pouvant être actionné électriquement, au moyen d'un actionneur, comportant un premier régulateur auquel sont amenées, comme grandeurs d'entrée, un signal représentant la valeur de consigne de la force de serrage ($F_{consigne}$) et un signal représentant la valeur réelle de la force de serrage ($F_{réelle}$), et dont la grandeur de sortie correspond à une valeur de consigne de la vitesse de rotation de l'actionneur ($n_{consigne}$), comportant un deuxième régulateur monté en aval du premier régulateur auquel sont amenés, en tant que grandeurs d'entrée, un signal représentant la valeur de consigne de la vitesse de rotation de l'actionneur ($n_{consigne}$) et un signal représentant la valeur réelle de la vitesse de rotation de l'actionneur ($n_{réelle}$), et dont la grandeur d'entrée correspond à une valeur de consigne du couple de rotation de l'actionneur ($M_{consigne}$), et comportant un troisième régulateur monté en aval du deuxième régulateur auquel sont amenés, comme grandeurs d'entrée, un signal représentant la valeur de consigne du couple de rotation de l'actionneur ($M_{consigne}$) et un signal représentant la valeur réelle ($I_{réel}$) du courant à amener à l'actionneur, et dont la grandeur d'entrée représente une grandeur de réglage (U) pour régler la valeur réelle ($I_{réelle}$) du courant à amener à l'actionneur, un module de réduction des données (8) étant prévu dans lequel des paires de valeurs ($F_{\eta=1,moyenne}$ (i) $\varphi_{n=1,moyenne}$ (i)) de la relation entre la position de l'actionneur ($\varphi$) et la force de serrage de l'actionneur (F) sont déterminées et auquel sont amenés, en tant que grandeurs d'entrée, des signaux représentant la valeur réelle de la position de l'actionneur ($\varphi_{réelle}$) ainsi que la valeur réelle du couple de rotation de l'actionneur ($M_{mot}$), un module d'identification des courbes caractéristiques (9) étant prévu dans lequel on détermine, à partir des paires de valeurs $F_{\eta=1,moyenne}$ (i),$_{\varphi n=1,moyenne}$ (i)) des paramètres $F_0$, $\varphi_0$, a décrivant la relation entre la position de l'actionneur ($\varphi$) et la force de serrage de l'actionneur (F), $F_0$ désignant une valeur offset de la force de serrage de l'actionneur, $\varphi_0$ désignant une valeur offset de la position de l'actionneur, et a désignant un facteur d'échelonnement, et un module de transformation (10) étant prévu dans lequel on calcule, au moyen de la relation, déterminée dans le module d'identification des courbes caractéristiques (9), à partir de la valeur réelle de la position de l'actionneur ($\varphi_{réelle}$), une valeur réelle de la force de serrage de l'actionneur ($F_{estimée}$ ($\varphi$)) correspondant à cette position, laquelle est amenée au régulateur de la force de serrage (1), **caractérisé en ce que** dans le module de réduction des données (8), le domaine défini par les valeurs de mesure de la position de l'actionneur est subdivisé au préalable en un grand nombre de n domaines partiels, à chaque domaine partiel étant associés, par le logiciel, deux filtres passe-bas de mième degré, et à partir des valeurs de mesure de la position de l'actionneur et du couple de rotation de l'actionneur, on calcule une force de serrage correspondant au rendement de l'actionneur $\eta=1$, le rapport de transmission du dispositif de conversion d'un mouvement de rotation en un mouvement de translation, et le moment d'inertie de masse global étant utilisé, et les valeurs de la position de l'actionneur et de la force de serrage de l'actionneur ($F_{\eta=1}$) correspondant au rendement de l'actionneur $\eta=1$, étant amenées aux filtres qui font partie du domaine partiel dans lequel tombe la valeur de position de l'actionneur, et par les filtres étant formées des valeurs moyennes de la position de l'actionneur ($\varphi_{\eta=1,moyenne}$ (i)) ainsi que de la force de serrage ($F_{\eta=1,moyenne}$ (i)) correspondant au rendement de l'actionneur $\eta=1$, et **en ce que** dans le module d'identification des courbes caractéristiques (9) on identifie, à partir des valeurs moyennes de tous les domaines partiels, la relation inconnue entre la position de l'actionneur et la force de serrage de l'actionneur.

**15.** Système de régulation selon la revendication 14, **caractérisé en ce que** le module de réduction des données ainsi que le module de transformation sont traités en temps réel de manière que chaque valeur de mesure obtenue soit prise en compte dans le module de réduction des données et que pour chaque position mesurée on calcule aussi une valeur correspondante de la force de serrage.

**16.** Système de régulation selon la revendication 14, **caractérisé en ce que** le module d'identification des courbes caractéristiques est traité dans le temps disponible à l'extérieur du processus de régulation.

17. Système de régulation selon les revendications 14 à 16, **caractérisé en ce qu'**au module de réduction des données est amenée, en tant que grandeur d'entrée complémentaire, une valeur de mesure de la force de serrage de l'actionneur déterminée au moyen d'un capteur de force (14), laquelle valeur favorise, dans la plage de mesure valable, la détermination des paires de valeurs de la relation entre la position de l'actionneur et la force de serrage de l'actionneur.

18. Système de régulation selon la revendication 17, **caractérisé en ce qu'**on utilise comme grandeur de régulation une valeur réelle de la force de serrage de l'actionneur ($F_{réelle}$) qui résulte de la somme de la valeur de mesure de la force de serrage de l'actionneur ($F_{mesurée}$, pondérée) pondérée avec un facteur de pondération k, et de la valeur réelle de la force de serrage de l'actionneur ($F_{estimée}$, pondérée) calculée au moyen du module de transformation (10) pondérée avec un facteur de pondération (1-k).

19. Système de régulation selon la revendication 18, **caractérisé en ce que** le facteur de pondération k est admis égal à 1 dans la plage de mesure inférieure du capteur de force (14), et diminue linéairement jusqu'à 0 dans la plage de mesure supérieure.

Fig. 1

Fig. 2

EP 1 414 686 B1

$\varphi_{ist}$

$M_{ist}$

16

$F_{\eta=1}$

$\varphi_{\eta=1}$

17

$1 \ldots n$

$19_1$

$18_1$

$19_2$

$18_2$

$19_n$

$18_n$

$F_{\eta=1, \text{mittel}}(n)$

$\varphi_{\eta=1, \text{mittel}}(n)$

Fig. 3

Fig. 4